# EUROPÄISCHE PATENTSCHRIFT

(11) **EP 2 094 617 B1**
(45) Veröffentlichungstag und Bekanntmachung des Hinweises auf die Patenterteilung: **25.09.2013**
(21) Anmeldenummer: 07817751.6
(22) Anmeldetag: 30.10.2007
(51) Int. Cl.: C03C 15/00, H01L 21/00

(54) **VERFAHREN UND VORRICHTUNG ZUM STRUKTURIEREN VON BAUTEILEN UNTER VERWENDUNG EINES WERKSTOFFS AUF DER BASIS VON SILIZIUMOXID**
METHOD AND DEVICE FOR PATTERNING COMPONENTS USING A MATERIAL BASED ON SILICON OXIDE
PROCÉDÉ ET DISPOSITIF DE STRUCTURATION DE COMPOSANTS PAR RECOURS À UN MATÉRIAU À BASE D'OXYDE DE SILICIUM

(30) Priorität: 30.10.2006 DE 102006051550
(43) Veröffentlichungstag der Anmeldung: 02.09.2009
(73) Patentinhaber: FHR Anlagenbau GmbH, 01458 Ottendorf-Okrilla (DE)
(72) Erfinder: GESSNER, Thomas, 09113 Chemnitz (DE); BERTZ, Andreas, 09123 Chemnitz (DE); SCHUBERT, Reinhard, 09127 Chemnitz (DE); WERNER, Thomas, 09569 Oederan (DE); HENTSCH, Wolfgang, 01445 Radebeul (DE); FENDLER, Reinhard, 01468 Moritzburg / OT Boxdorf (DE); KÖHLER, Lutz, 01445 Radebeul (DE)
(74) Vertreter: Rumrich, Gabriele
(86) Internationale Anmeldenummer: PCT/DE2007/001954
(87) Internationale Veröffentlichungsnummer: WO 2008/052528

(56) Entgegenhaltungen:
- EP-A- 0 984 328
- WO-A-86/06203
- DE-A1- 2 224 468
- JP-A- 2000 164 567
- JP-A- 2002 284 545
- US-A- 5 753 566

## Beschreibung

Die Erfindung betrifft ein Verfahren und eine Vorrichtung zum Strukturieren von Bauteilen unter Verwendung von Silikatglas oder Glaskeramik.

Silizium- und Glaswafer gehören zu den in der Mikrotechnologie am häufigsten eingesetzten Materialien. Glas gewinnt dabei für verschiedene MEMS-Anwendungen (Mikro-Elektro-Mechanische Systeme) zunehmend an Bedeutung. Dies betrifft neben dem klassischen Einsatz als Verbundpartner zum Verkappen sensibler Sensoren vor allem auch mikrofluidische Anwendungen für die Bioanalyse. Daraus ergibt sich aber auch die Notwendigkeit zur Strukturierung der verschiedenen Silikatgläser unterschiedlicher Zusammensetzung. Je nach Anwendung sind unterschiedlichste Strukturen im Glas erforderlich: Löcher mit hohem Aspektverhältnis oder definierten Schrägen zur Durchkontaktierung, Gruben zur Kanal- und Membranherstellung oder auch spezielle Formen für Hochfrequenzbauelemente.

Während für die Siliziumstrukturierung sowohl hochpräzise als auch effiziente Plasmaätzverfahren (Hochrateätzen) existieren, ist die Strukturierung von Glas in große Ätztiefen (über 10 µm) mittels Plasmatechnik bisher vergleichsweise nur sehr schlecht möglich. So werden derzeit noch Technologien auf der Basis von Laser, Ultraschall, Sandstrahlen, Nassätzprozessen oder auch Sägen bevorzugt. Plasmaätzverfahren erlauben bisher praktisch nur Ätzraten deutlich unter 1 µm/min. (X. H. Li, T. Abe, and M. Esashi, "Deep reactive ion etching of Pyrex glass," in Proc. 13th IEEE MEMS 2000 Technical Digest, vol. 1/23-27/00, Miyazaki, Japan, 2000, pp. 271-276; J.H. Park et al., "Deep dry etching of borosilicate glass using SF6/Ar ...", Microelectronic Engineering 82 (2005) 119-128) und eine sehr eingeschränkte Steuerbarkeit der Ätzprofile. So wird nur mittels einer speziell zugeschnittenen Maskengeometrie eine Abflachung von Böschungswinkeln (beispielsweise auf bis zu ca. 70°) erreicht. Auch ist bei den existierenden Prozessen eine aufwändige Maskentechnologie erforderlich. So setzt das Erreichen von Ätztiefen um 50 µm beispielsweise eine stabile Nickelmaske von 4 µm, (X. H. Li, T. Abe, and M. Esashi, "Deep reactive ion etching of Pyrex glass using SF6 plasma" Sensors and Actuators A 87 (2001) 139-145) bzw. 9 µm (J.H. Park et al., "Deep dry etching of borosilicate glass using SF6/Ar ...", Microelectronic Engineering 82 (2005) 119-128) voraus. Die Herstellung solcher Nickelmasken mit elektrochemischen Verfahren ist mit zusätzlichem Aufwand verbunden, da hierfür spezielle Zwischenschichten erforderlich sind, die ebenfalls strukturiert werden müssen. Außerdem ist es aus der vorgenannten Veröffentlichung bekannt, dass Nickel einen erheblichen Zuwachs an mechanischem Stress zur Folge hat.

Möglichkeiten zur Ätzrateerhöhung werden bisher (X. H. Li, T. Abe, and M. Esashi, Deep reactive ion etching of Pyrex glass using SF6 plasma, Sensors and Actuators A 87 (2001) 139-145) nur durch Einsatz einer hohen lonenbeschleunigungsspannung (proportional zur elektrischen Vorspannung, d.h. der sogenannten Biasspannung) und eines geringen Arbeitsdruckes gesehen. Dabei wirkt der durch beide Parameter erhöhte lonenbeschuss besonders deshalb ätzrateerhöhend, da die üblicherweise eingesetzten Gläser meist auch Al₂O₃ - und Na₂O-Bestandteile enthalten, die in Verbindung mit den eingesetzten fluorbasierten Plasmen keine flüchtigen Reaktionsprodukte bilden. Es wird zwar ein geringer Anstieg der Ätzrate mit der Temperatur (nach Aussage der Autoren ist jedoch die Temperatur vernachlässigbar) bei 0.8 Pa beobachtet, deren Maximum liegt aber immer unterhalb der Ätzrate bei niedrigem Druck (0.2 Pa). Damit dominiert nach Aussagen der Autoren eindeutig das physikalisch bestimmte Sputterätzen. Dies ist auch die Basis für alle anderen bekannten Prozesse zum Plasmaätzen von Glassubstraten.

In US 6,120,661 ist eine Vorrichtung zur Behandlung von Glassubstraten durch Ätzen, CVC oder Sputtern beschrieben. Die Verfahrensbedingungen werden jedoch nicht im einzelnen ausgeführt und eine strukturierende Behandlung nicht offengelegt. In der Schrift JP 2000 164567 A wird ein Plasmaätzverfahren beschrieben, bei welchem lediglich eine Maske aus z.B. Siliziomoxid verwendet wird und welches zum Ätzen eines ferromagnetischen Dünnfilms verwendet wird. Dabei ist Vorraussetzung eines Ätzprozesses generell, dass das Maskenmaterial nicht angegriffen werden darf. Das Strukturieren von Bauteilen aus Siliziomoxid ist aus dieser Druckschrift nicht entnehmbar.

Die US 5,753,566 A offenbart ein Verfahren und eine Vorrichtung, mit welchen eine Glasschicht bei leicht erhöhter Temperatur (70-110°C) geätzt wird. Es geht dabei jedoch nicht um das Herstellen einer Struktur eines Bauteiles, sondern um das vollflächige Abätzen (etch back) einer Spin-on-Glas-Schicht. Zum Strukturieren von Bauteilen, d.h. zum partiellen Abtragen eines Werkstoffs auf der Basis von Siliziumoxid, insbesondere von Silikatglas, Glaskeramik oder Quarz, ist diese Lösung jedenfalls nicht geeignet.

Der Erfindung liegt die Aufgabe zu Grunde, ein Verfahren und eine Vorrichtung zum Strukturieren von Bauteilen auf der Basis von Silikatglas oder Glaskeramik zu entwickeln, welche es ermöglichen, bei hoher Geschwindigkeit zu ätzen und dabei eine gute Selektivität zum Maskenmaterial sowie große Variabilität beim Ätzprofil zu gewährleisten.

Diese Aufgabe wird mit den Merkmalen des 1. und 11. Patentanspruchs gelöst.

Erfindungsgemäß erfolgt bei dem Verfahren zum Strukturieren von Bauteilen unter Verwendung von Silikatglas oder Glaskeramik, an zumindest einer ersten Oberfläche des Bauteils durch Plasmaätzen partiell ein Abtragen des Werkstoffs, wobei während des Plasmaätzens zumindest an der zu ätzenden Oberfläche eine Substrattemperatur einstellbar ist, die im wesentlichen größer als 90°C, aber geringer als die Erweichungstemperatur des Werkstoffs ist. Durch diese hohe Substrattemperatur kann eine überraschend hohe Ätzrate erzielt werden.

Bevorzugt wird das Verfahren mit wenigstens einer Energiequelle in einem flourhaltigen Gasgemisch durchgeführt, wobei auf der Oberfläche des Werkstoffs eine Maske aufgebracht wird, welche die abzutragenden Bereiche des Werkstoffs freilässt. Dabei wird entweder mit einer ersten Energiequelle in Form einer Hochfrequenz- oder Niedrigfrequenz- Plasmaquelle ein Plasma mit der Möglichkeit der Veränderung der lonenenergie und/oder mit einer zweiten Energiequelle ein hochdichtes Plasma (High Density Plasma-HDP) erzeugt. Durch die Wahl bzw. Kombination der Energiequellen zur Erzeugung des Plasmas ist ein sehr breites Bearbeitungsspektrum von Bauteilen auf Basis von Siliziumoxid möglich.

Die Substrattemperatur des zu bearbeitenden Bauteils beträgt bevorzugt 100°C bis 700°C. Untersuchungen haben jedoch gezeigt, dass die besten Ergebnisse bei einer Substrattemperatur zwischen 300°C und 500°C erzielbar sind.

Es ist weiterhin möglich, das Plasmaätzen mit einer konstanten Ionenenergie durchzuführen. Zusätzliche Vorteile bietet jedoch eine sich verändernde Ionenenergie, wobei sich während des Plasmaätzens hohe Ionenenergien mit reduzierten lonenenergien abwechseln. Dabei wird die Ionenenergie bei einem durch die Bildung nichtflüchtiger Reaktionsprodukte bedingten Absinken der Glasätzrate mit der Ätzzeit kurzzeitig erhöht und anschließen wieder verringert. Dies erfolgt bevorzugt alternierend, wobei nach jeweils 30s bis 90s die Ionenenergie verändert wird. Die nichtflüchtigen Reaktionsprodukte werden durch die erhöhte Ionenenergie und den dadurch hervorgerufenen Sputterprozess vom Ätzgrund beseitigt/entfernt, worauf die Ionenenergie wieder gesenkt und der Ätzvorgang mit verringerter Ionenenergie und einer (aufgrund der entfernten nicht flüchtigen Reaktionsprodukte) wieder möglichen höheren Ätzrate fortgesetzt werden kann.

Vorteilhafter Weise ist das zu erzeugende Ätzprofil in Abhängigkeit von Ionenenergie und/oder Ionendichte und/oder der Zusammensetzung des Gasgemisches und/oder Substrattemperatur einstellbar.

Z.B. kann das Ätzprofil durch das Verhältnis von Ionenenergie, Ionendichte und Passiviergasen einerseits, zur Substrattemperatur andererseits beeinflusst werden. Dabei ist das Ätzprofil unter anderem wie folgt beeinflussbar:
- durch sich erhöhende Ionendichte - zunehmende Steilheit der Ätzböschung,
- durch sich erhöhenden Fluorgehalt im Gasgemisch - abnehmende Steilheit der Ätzböschung,
- mit sich erhöhender Temperatur - abnehmende Steilheit der Ätzböschung.

Die Maske, die vor dem Ätzprozess auf die Oberfläche des zu ätzenden Werkstoffes aufgebracht wird, besteht bevorzugt aus einem widerstandsfähigen Metall (z.B. Chrom, Nickel, Aluminium oder deren Legierungen) oder aus einem temperaturbeständigen organischen Material (z.B. Polymide oder Epoxidharz).

Das Plasmaätzen erfolgt insbesondere bei einem Prozessdruck von 1 bis 40 Pa und einer Biasspannung bis 300 V, wobei nachgewiesen wurde, dass mit steigender Substrattemperatur die Ätzraten zunehmen.

Es ist möglich, auch an einer der ersten Oberfläche gegenüberliegenden zweiten Oberfläche ein Strukturieren des Bauteils durchzuführen. Dies kann ebenfalls durch Plasmaätzen erfolgen, es ist aber auch eine Laserbearbeitung oder eine mechanische Bearbeitung wie Polieren, Sandstrahlen oder Schleifen möglich. Durch das Bearbeiten der zweiten Oberfläche kann deren Strukturieren und/oder Abdünnen erfolgen. Damit können komplexe Strukturen erzeugt werden. Es ist weiterhin möglich, dass der zu strukturierende Werkstoff auf Basis von Siliziumoxid auf einem Substrat aufgebracht wird, welches bevorzugt aus Silizium besteht und dass es zum Strukturieren von Wafern eingesetzt wird.

Damit sind auf effektive Weise Siliziumoxid-Silizium-Waferverbunde herstellbar.

Die erfindungsgemäße Vorrichtung zum Strukturieren von Bauteilen unter Verwendung von Silikatglas oder Glaskeramik, an zumindest einer ersten Oberfläche des Bauteils durch Plasmaätzen partiell ein Abtragen des Werkstoffs erfolgt, ist mit einer Heizung zur Erzeugung einer Substrattemperatur (Bauteiltemperatur) - größer als 90°C, aber geringer als die Erweichungstemperatur des Bauteilwerkstoffs - ausgestattet.

Weiterhin weist die Vorrichtung mindestens eine Energiequelle zur Erzeugung des Plasmas, sowie ein fluorhaltiges Gasgemisch auf. Die Oberfläche des Werkstoffs ist mit einer Maske beschichtet, welche die abzutragenden Bereiche des Werkstoffs freilässt.

Es ist vorteilhafter Weise vorrichtungsseitig eine erste Energiequelle in Form einer Hochfrequenz- oder Niedrigfrequenz- Plasmaquelle zur Erzeugung eines Plasmas mit der Möglichkeit der Einstellung/Veränderung der Ionenenergie (vor oder während des Atzens) und/oder eine zweite Energiequelle zur Erzeugung eines hochdichten Plasma (High Density Plasma-HDP) integriert.

Mit der Heizung wird eine Substrattemperatur von 100°C bis 700°C, bevorzugt zwischen 300 °C und 500°C zumindest auf der zu bearbeitenden Substratoberfläche erzeugt.

Die Vorrichtung besteht im Wesentlichen aus einer Vakuumkammer zum Plasmaätzen, in der eine fluorhaltige Atmosphäre herrscht und in der eine Aufnahme für das Bauteil angeordnet ist, wobei die Aufnahme bevorzugt ein Substratträger (Chuck) zur Aufnahme eines Wafers ist. Die Heizung ist entweder mit der Aufnahme gekoppelt oder oberhalb der Aufnahme angeordnet und als Strahlungsheizung ausgebildet.

Die erste Energiequelle ist dabei mit dem Substratträger gekoppelt, die zweite Energiequelle befindet sich in Verbindung mit einer Spulenanordnung über dem Substratträger. Neben der Verwendung einer Spulenanordnung für die zweite Energiequelle zur Erzeugung des hochdichten Plasmas kann auch eine Mikrowellenquelle als zweite Energiequelle eingesetzt werden.

Die Anregungsfrequenz der ersten Energiequelle liegt bevorzugt zwischen 10 kHz bis 27 MHz, die Anregungsfrequenz der zweiten Energiequelle ist bevorzugt > 2 MHz. Die überraschend hohe Ätzrate der erfindungsgemäßen Lösung wird offenbar dadurch erreicht, dass das Glas zumindest an der zu ätzenden Oberfläche hohe Temperaturen aufweist. So wurde herausgefunden, dass trotz der Beimischungen von beispielsweise Al₂O₃ und Na₂O in einem Silikatglas, selbst bei einem vergleichsweise hohen Prozessdruck (von 35 Pa) und geringer Biasspannung (22 V), Ätzraten von bis zu 4 µm/ min. möglich sind, wenn die Glastemperatur ausreichend hoch ist (z.B.: 400°C). Dabei wird eine zum Stand der Technik vergleichbare elektrische Energie in die Plasmaquellen eingekoppelt (Inductively Coupled Plasma - ICP). Dies kann nur durch das Vorhandensein eines überraschend dominierenden chemischen Effektes verstanden werden. So kann auch auf Basis der Temperaturabhängigkeit der Glasätzrate für das Ätzen von PYREX-Glas beispielsweise eine Aktivierungsenergie von 13,2 kJ/mol ermittelt werden.

Die Erfindung wird nachfolgend anhand von Ausführungsbeispielen und zugehörigen Zeichnungen näher erläutert. Es zeigen:
- Fig. 1:: Prinzipdarstellung einer Plasmaätzkammer unter Verwendung einer ersten Energiequelle in Form einer Hochfrequenz-Plasmaquelle zur Erzeugung eines Plasmas und Einstellung der Ionenenergie, die mit dem Substratträger gekoppelt ist,
- Fig. 1a:: Prinzipdarstellung einer Plasmaätzkammer gem. Fig. 1, wobei zusätzlich mit einer zweiten Energiequelle ein hochdichtes Plasma (High Density Plasma-HDP) erzeugbar ist.
- Fig. 2:: Querschnitt eines Bauteils aus einem Glassubstrat, welches mit einer strukturierten Maskierungsschicht versehen ist,
- Fig. 3:: Querschnitt eines Bauteils aus einem Glassubstrat nach dem Ätzen und dem Entfernen der Maske mit flacher Ätzböschung,
- Fig. 4:: Querschnitt eines Bauteils aus einem Glassubstrat nach dem Ätzen und dem Entfernen der Maske mit nahezu senkrechter Ätzböschung,
- Fig. 5:: Querschnitt eines Bauteils aus einem Glassubstrat nach dem Ätzen und dem Entfernen der Maske mit Durchgangslöchern,
- Fig. 6:: Bauteil aus einem Siliziumwafer mit aufgebondetem und strukturiertem Glassubstrat,
- Fig. 7:: Bauteil aus einem Siliziumwafer mit aufgebondetem und strukturiertem Glassubstrat, durch welches eine Kontaktierung zu einer auf dem Siliziumwafer aufgebrachten Metallisierung führt,
- Fig. 8:: in das aus Glassubstrat bestehende Bauteil geätzte schräge Ätzflanke, durch welche die Metallisierung mittels eines Sputterprozesses erfolgen kann,
- Fig. 9:: Bauteil aus Glassubstrat , dessen Oberseite durch Plasmaätzen strukturiert wurde und dessen Unterseite durch ein mechanisches Strukturieren partiell ausgedünnt wurde,
- Fig. 10:: Bauteil aus Glassubstrat , dessen Oberseite durch Plasmaätzen strukturiert wurde und dessen Unterseite durch ein mechanisches Strukturieren partiell ausgedünnt wurde, wodurch Durchgangslöcher im Glassubstrat erzeugt wurden.

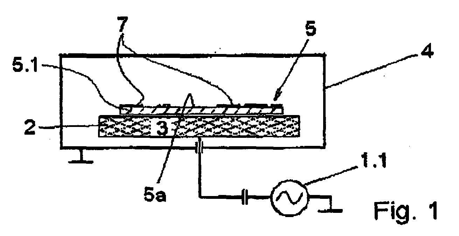

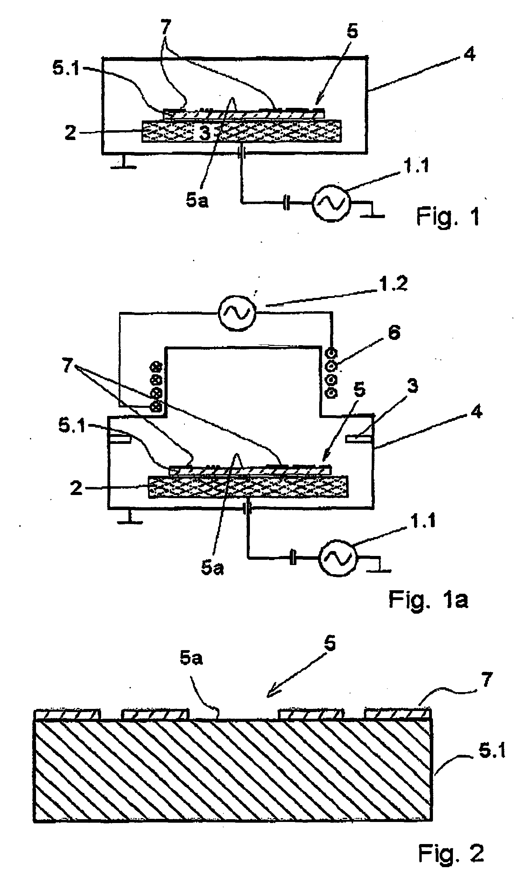

Figur 1 zeigt die Prinzipdarstellung einer erfindungsgemäßen Einrichtung unter Verwendung einer ersten Energiequelle 1.1 in Form einer Hochfrequenz-Plasmaquelle zur Erzeugung eines Plasmas mit der Möglichkeit der Veränderung der Ionenenergie, die mit einer Aufnahme in Form eines Substratträgers 2 gekoppelt ist. Der Substratträger 2 ist mittels einer am Substratträger 2 angeordneten Heizung 3 beheizbar, um die erforderliche Substrattemperatur zu erzielen. Die erste Energiequelle 1.1 und der beheizbare Substratträger 2 sind hier in der Vakuumkammer 4 (oder gem. eines nicht dargestellten Ausführungsbeispiels nahe der Vakuumkammer) angeordnet, in welcher während des Plasmaätzens eine geeignete Gasatmosphäre eines Fluor-Gasgemisches herrscht. In der Vakuumkammer 4 wird mittels eines nicht dargestellten Pumpensystems der gewünschte Unterdruck gehalten. Zwingend erforderlich ist die erste Energiequelle 1.1 zur elektrischen Plasmaerzeugung, die auch zur Erzeugung der Biasspannung genutzt wird (beeinflusst die Ionenenergie).

Das zu ätzende Bauteil 5, welches z.B. aus Glassubstrat 5.1 besteht und an seiner ersten zu ätzenden Oberfläche 5a mit einer Maske 7 versehen ist, wird gem. Fig. 1 von dem Substratträger 2 aufgenommen, durch dessen Heizung 3 die erforderliche Substrattemperatur erzeugt und der für die Ausbildung definierter Potentialverhältnisse zuständig sein kann.

Gem. Fig. 1 a wird zusätzlich zu der ersten Energiequelle 1.1, die mit dem Substratträger 2 gekoppelt ist, eine von dieser unabhängig steuerbare zweite Energiequelle 1.2 verwendet. Dabei ist die zweite (obere) Energiequelle 1.2 für den Dissoziationsgrad des in der Vakuumkammer 4 befindlichen Gases zuständig, wodurch mit der zweiten Energiequelle 1.2 ein hochdichtes Plasma (High Density Plasma-HDP) erzeug bar ist.

Die Energieeinkopplung der oberen zweiten Energiequelle 1.2 kann, wie in Fig. 1a dargestellt, induktiv mittels eines Spulensystems 6 erfolgen, aber auch mittels anderer, nicht dargestellter Anordnungen (ECR, Mikrowelle, mit Magnetfeldunterstützung, VHF usw.). Vorteilhafterweise wird damit ein hochdichtes Plasma (HDP) erzeugt. Das zu ätzende Bauteil 5 (z.B. Glassubstrat 5.1) befindet sich gem. Fig. 1a ebenfalls auf einem geeigneten Substratträger 2, der hier jedoch nicht mit einer Heizung versehen ist. Die entsprechend der Erfindung für das Hochrateätzen von Glas erforderliche erhöhte Oberflächentemperatur wird hier mittels einer Heizung 3 in Form eines Strahlungsheizers erzielt, der über dem Bauteil 5 in der Vakuumkammer 4 angeordnet ist. Gemäß eines nicht dargestellten Ausführungsbeispiels kann die Heizung auch im Substratträger integriert sein.

Bild 2 zeigt ein Bauteil 5 aus einem Glassubstrat im Querschnitt, welches mit einer strukturierten Maskierungsschicht/Maske 7 an seiner ersten Oberfläche 5a bedeckt ist. Als Material für die Maske 7 haben sich verschiedene Metalle sowie auch temperaturbeständige organische Materialien (wie z.B. Polymide und Epoxidharze) als geeignet erwiesen. Vorteilhaft ist beispielsweise eine dünne Aluminiumschicht, die insbesondere je nach gewünschter Ätztiefe 100 nm bis mehrere µm - z.B. 1 µm für eine Ätztiefe bis 50µm - betragen kann. Diese kann auf einfachem Wege nasschemisch oder auch mittels Plasmaätzverfahren strukturiert werden.

Die nachfolgenden Bilder 3, 4 und 5 zeigen aus Glassubstrat 5.1 in Form von Borsilikatglas bestehende Bauteile 5 im Querschnitt, welche mit unterschiedlichen Parametern entsprechend des erfindungsgemäßen Verfahrens aus Richtung der ersten Oberfläche 5a strukturiert wurden, nach der Entfernung des Maskenmaterials/der Maske. So wird aus Richtung der ersten Oberfläche 5a im Bauteil 5 (Glassubstrat 5.1) ein Ätzprofil 8 mit flacher Ätzböschung 8.1 gemäß Bild 3 erhalten, wenn mit einer Substrattemperatur von 400°C, SF6 und CF4 als Ätzgasgemisch, einem Arbeitsdruck von 35 Pa, einer von der ersten Energiequelle 1.1 (Plasmaquelle) eingekoppelten Leistung von 40 W und einer an der zweiten Energiequelle 1.2 (Plasmaquelle zur Erzeugung des hochdichten Plasmas) eingekoppelten Leistung von 1000 W gearbeitet wird. Die dabei erzielte Ätzrate von Borsilikatglas (Borofloat) liegt über allen bisher erzielbaren Werten, bei ca. 3700 nm/min. Das so erzielte und eine relativ flache Ätzböschung 8.1 aufweisende Ätzprofil 8 kann für den späteren Einsatz z.B. dann von Vorteil sein, wenn senkrechte Ätzflanken für Nachfolgeprozesse störend sind. Beim Ätzen in große Tiefen (z.B.: 100 µm) zeigt sich allerdings, dass die Ätzrate durch die Anhäufung von nichtflüchtigen Reaktionsprodukten am Ätzgrund allmählich abnimmt.

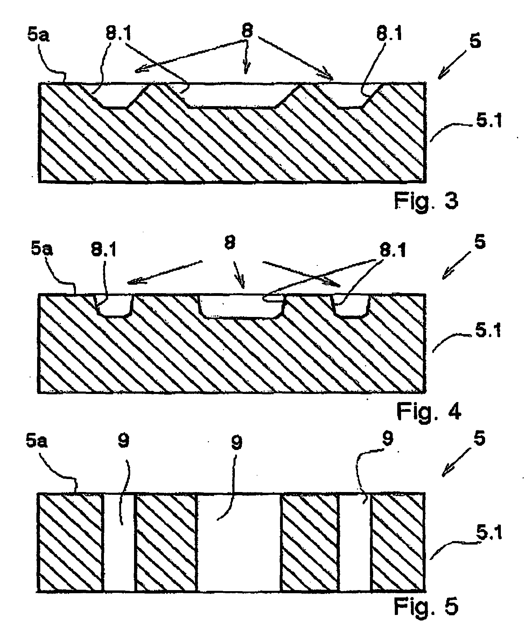

Um dem entgegenzuwirken ist es möglich, den Ätzprozess mit sich verändernden Ionenenergien durchzuführen. Dazu werden z.B. nach jeweils einer Minute alternierend geänderte Parameter eingestellt. In dieser Zeit wird mit einem Arbeitsdruck von 1 Pa und einer mittels der ersten Energiequelle 1.1 (erste Plasmaquelle) eingekoppelten Leistung von 300 W gearbeitet. Durch diesen Zwischenprozess mit deutlich erhöhter Ionenenergie kommt es zu einer Reinigungswirkung (Sputtern) auf dem Ätzgrund des Ätzprofils 8, wodurch die nichtflüchtigen Reaktionsprodukte entfernt werden können. Diese werden dann bekanntermaßen z.T. auch an den Strukturseitenwänden abgelagert, wo sie eine passivierende Wirkung haben können. Wird das Verhältnis der isotropen zur anisotropen Ätzphase weiter in Richtung zu einem anisotropen Ätzprozess verschoben, indem beispielsweise die Ätzzeiten für beide Ätzphasen bei einer Minute liegen, wird ein Ätzprofil 8 mit nahezu senkrechter Ätzböschung 8.1 erreicht, wie es in Figur 4 dargestellt ist. Wird eine ausreichend stabile Maske 7 verwendet, wie z.B. 6 µm Aluminium, können auch Durchgangslöcher 9, entsprechend Fig. 5, in z.B. 200 µm dicke Glassubstrate 5.1 des Bauteiles 5 geätzt werden. Dann ist es von Vorteil, wenn zur Reduzierung des Flächenverbrauches möglichst anisotrope Ätzprofile durch eine optimal gesteuerte Ionenenergie in Verbindung mit einer zusätzlichen Seitenwandpassivierung erzielt werden. Dies erfolgt bei speziellen Parametern durch die Zugabe weiterer geeigneter Gase. Dieser Effekt ist beispielsweise unter Zumischung von Gasen mit einem hohen Kohlenstoffanteil, wie z.B. CH₄, nachweisbar, aber nicht daran gebunden.

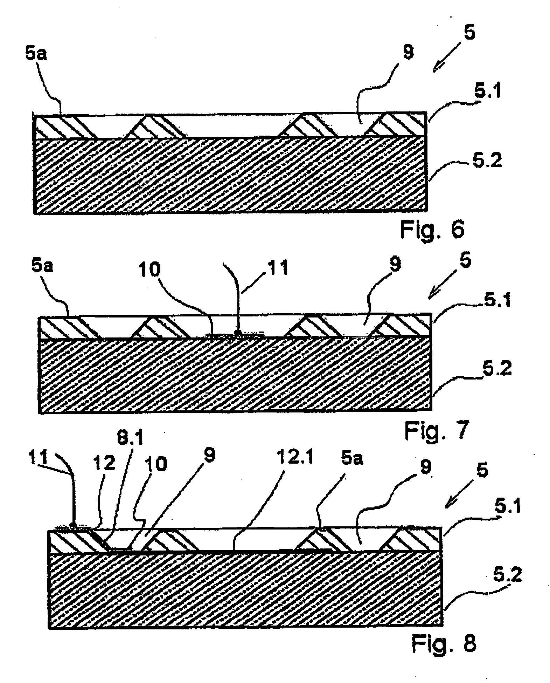

Ein weiteres Ausführungsbeispiel ist in Fig. 6 dargestellt, bei dem besteht das Bauteil 5 aus dem Glassubstrat 5.1, welches auf einem Siliziumwafer 5.2 aufgebondet und aus Richtung seiner ersten Oberfläche 5a mittels Durchgangslöchern 9 strukturiert wurde. Dies ist beispielsweise dann interessant, wenn auf dem mit einem Glassubstrat 5.1 abgedeckten Siliziumwafer 5.2 bestimmte Anschlüsse von oben kontaktiert werden müssen. Eine solche Anordnung zeigt Figur 7. Hier ist der Fall dargestellt, bei dem ausreichend Platz für eine relativ große Öffnung im Glassubstrat 5.1 zur Verfügung steht. Dann ist es möglich, durch das Glassubstrat 5.1 hindurch (durch eben diese großen Öffnungen/Durchgangslöcher 9) den auf dem Siliziumwafer 5.2 vorhandenen elektrischen Anschluss 10 nach außen mittels Drahtbonden 11 zu erreichen. Für den Fall, dass die Öffnungen nicht ausreichend groß gestaltet werden können oder metallische Kontaktflächen auf der Oberseite 5a vom Glassubstrat 5.1 für andere Kontaktierungsverfahren benötigt werden (Bumping), kann mittels einer ersten Metallschicht 12 der elektrische Anschluss 10 auf die Oberfläche des Glassubstrates 5.1 gezogen werden. Dabei kann, wie im Bild 8 schematisch dargestellt, durch die mit dem erfindungsgemäßen Verfahren in Glassubstrat 5.1 geätzte flache Ätzflanke 8.1 des Durchgangslochs 9, die erste Metallschicht 12 vorteilhaft mit einem kostengünstigen Sputterprozess aufgebracht werden. Zwischen dem Glassubstrat 5.1 und dem Siliziumwafer 5.2 kann ebenfalls eine zweite Metallschicht 12.1 angeordnet sein, welche die Kontaktierung /den Anschluss 10 aufweist, zu welcher die erste Metallschicht 12 führt.

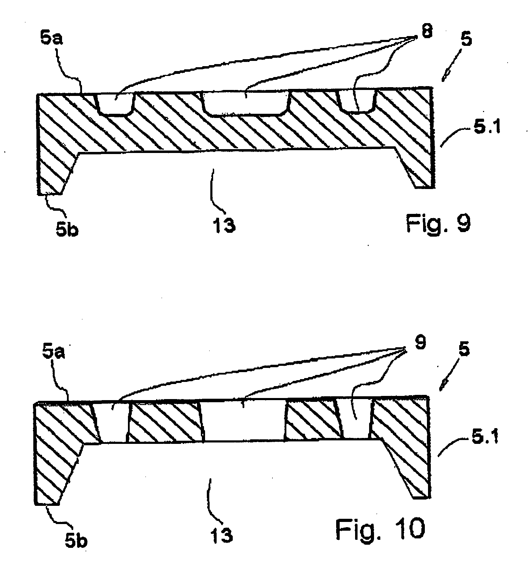

Ein Bauteil 5 aus Glassubstrat 5.1, dessen erste Oberfläche 5a durch Plasmaätzen mit einem Ätzprofil 8 versehen wurde und dessen gegenüberliegende zweite Oberfläche 5b durch ein mechanisches Strukturieren mit einem Profil 13 partiell ausgedünnt wurde, ist in Fig. 9 dargestellt.

Figur 10 zeigt eine ähnliche Ausführungsvariante, jedoch wurde das Glassubstrat 5.1 von seiner Unterseite (zweiten Oberfläche 5b) her soweit durch mechanisches Strukturieren mit einem Profil 13 ausgedünnt, dass Durchgangslöcher 9 im Glassubstrat 5.1 des Bauteils 5 gebildet werden.

Mit der erfindungsgemäßen Lösung ist es erstmalig möglich, Bauteile auf der Basis von Siliziumoxid, insbesondere Silikatglas, Glaskeramik oder Quarz mit hohen Ätzraten durch Plasmaätzen zu strukturieren.

Die verschiedensten Glassorten wie z.B. Silikatgläser oder Glaskeramiken können strukturiert und auf dieser Basis Bauteile hergestellt bzw. bearbeitet werden.

Durch die Kombination mit Wafern aus Silizium können erstmalig effektiv elektronische/mikroelektronische Bauteile in Form von strukturierten Silizium-Glas-Waferverbunden hergestellt werden.

Ebenso ist es möglich, Glaskeramiken für vielfältige andere technische Anwendungen zu strukturieren und damit z.B. Beschriftungen oder Logos einzubringen.

## Patentansprüche

1. Verfahren zum Strukturieren von Bauteilen bestehend aus einem Werkstoff auf der Basis von Silikatglas oder Glaskeramik, unter Verwendung wenigstens einer Energiequelle (1.1, 1.2), wobei an zumindest einer ersten Oberfläche (5a) des Bauteils (5) durch Plasmaätzen partiell ein Abtragen des Werkstoffs erfolgt und während des Plasmaätzens zumindest an der zu ätzenden Oberfläche eine Substrattemperatur eingestellt wird, die größer als 130°C, aber geringer als die Erweichungstemperatur des Werkstoffs ist und wobei während des Plasmaätzens hohe Ionenenergien mit reduzierten Ionenenergien abwechseln.

2. Verfahren nach Anspruch 1, **dadurch gekennzeichnet, dass** es mit wenigstens einer Energiequelle (1.1, 1.2) in einem fluorhaltigen Gasgemisch durchgeführt wird und dass zumindest auf der ersten Oberfläche (5a) des Bauteils (5) eine Maske (7) aufgebracht wird, welche die abzutragenden Bereiche des Werkstoffs des Bauteils (5) freilässt.

3. Verfahren nach Anspruch 1 oder 2, **dadurch gekennzeichnet, dass**
- mit einer ersten Energiequelle (1.1) in Form einer Hochfrequenz- oder Niederfrequenz- Plasmaquelle ein Plasma mit der Möglichkeit der Veränderung der Ionenenergie
und/oder
- mit einer zweiten Energiequelle(1.2) ein hochdichtes Plasma (High Density Plasma-HDP)
erzeugt wird.

4. Verfahren nach einem der Ansprüche 1 bis 3, **dadurch gekennzeichnet, dass** die Substrattemperatur 130°C bis 700°C beträgt und insbesondere zwischen 300 °C und 500°C liegt.

5. Verfahren nach Anspruch 4, **dadurch gekennzeichnet, dass** die Ionenenergie bei einem durch die Bildung nichtflüchtiger Reaktionsprodukte bedingten Absinken der Glasätzrate mit der Ätzzeit kurzzeitig erhöht wird und anschließend wieder verringert wird.

6. Verfahren nach Anspruch 4 oder 5, **dadurch gekennzeichnet, dass** alternierend nach jeweils 30s bis 90s die Ionenenergie verändert wird.

7. Verfahren nach einem der Ansprüche 1 bis 6, **dadurch gekennzeichnet, dass** ein zu erzeugendes Ätzprofil (8) in Abhängigkeit von Ionenenergie und/oder Ionendichte und/oder der Zusammensetzung des Gasgemisches und/oder der Substrattemperatur einstellbar ist, wobei
das Ätzprofil (8) durch das Verhältnis von Ionenenergie, Ionendichte und Passiviergasen einerseits, zur Substrattemperatur andererseits dadurch ein stellbar ist,
- dass die Ionendichte zur Vergrößerung der Steilheit einer Ätzböschung (8.1) des Ätzprofils (8) erhöht wird
und/oder
- dass der Fluorgehalt im Gasgemisch und/oder die Temperatur zur Verringerung der Steilheit der Ätzböschung (8.1) erhöht wird.

8. Verfahren nach einem der Ansprüche 1 bis 9, **dadurch gekennzeichnet, dass** eine Maske (7) aus einem widerstandsfähigen Metall vor dem Ätzprozess zumindest auf die erste Oberfläche (5a) des zu ätzenden Werkstoffes des Bauteils (5) aufgebracht wird, die insbesondere aus Chrom, Nickel, Aluminium oder deren Legierungen besteht.

9. Verfahren nach einem der Ansprüche 1 bis 8, **dadurch gekennzeichnet, dass** eine Maske (7) aus einem temperaturbeständigen organischen Material vor dem Ätzprozess zumindest auf die erste Oberfläche (5a) des zu ätzenden Werkstoffes des Bauteils (5) aufgebracht wird, die insbesondere aus Polyamiden oder Epoxydharz besteht.

10. Verfahren nach einem der Ansprüche 1 bis 9, **dadurch gekennzeichnet, dass** das Plasmaätzen bei einem Prozessdruck von 1 bis 40 Pa und einer Biasspannung bis 300 V erfolgt.

11. Vorrichtung zum Strukturieren von Bauteilen (5) bestehend aus Silikatglas oder Glaskeramik, wobei an zumindest einer ersten Oberfläche (5a) des Bauteils (5) durch Plasmaätzen partiell ein Abtragen des Werkstoffs erfolgt, wobei die Vorrichtung mit einer Heizung (3) zur Erzeugung einer Substrattemperatur zumindest an der zu ätzenden Oberfläche größer als 130°C, aber geringer als die Erweichungstemperatur des Werkstoffs des Bauteils (5) und mit wenigstens einer Energiequelle (1.1, 1.2), die wechselnde Ionenenergien erzeugt, ausgestattet ist.

12. Vorrichtung nach Anspruch 11, **dadurch gekennzeichnet, dass** sie
- mindestens eine Energiequelle (1.1, 1.2) zur Erzeugung des Plasmas aufweist,
- ein fluorhaltiges Gasgemisch aufweist und
- eine zumindest auf der ersten Oberfläche (5a) des Bauteils (5) aufgebrachte Maske (7) aufweist, welche die abzutragenden Bereiche des Werkstoffs des Bauteils (5) freilässt.

13. Vorrichtung nach Anspruch 11 und 12, **dadurch gekennzeichnet, dass** sie
- eine erste Energiequelle (1.1) in Form einer Hochfrequenz- oder Niederfrequenz- Plasmaquelle zur Erzeugung eines Plasmas mit der Möglichkeit der Veränderung der Ionenenergie
und/oder
- eine zweite Energiequelle (1.2) zur Erzeugung eines hochdichten Plasmas (High Density Plasma-HDP)
aufweist.

14. Vorrichtung nach einem der Ansprüche 11 bis 13, **dadurch gekennzeichnet, dass** mit der Heizung (3) eine Substrattemperatur von 130°C bis 700°C, insbesondere von 300°C bis 500°C erzeugbar ist.

15. Vorrichtung nach einem der Ansprüche 11 bis 14, **dadurch gekennzeichnet, dass** sie eine Vakuumkammer (4) zum Plasmaätzen aufweist, in der eine Aufnahme für das Bauteil (5) angeordnet ist, wobei
- die Heizung (3) mit der Aufnahme gekoppelt/in die Aufnahme integriert und/oder
- oberhalb der Aufnahme angeordnet und als Strahlungsheizung ausgebildet ist.

16. Vorrichtung nach Anspruch 15, **dadurch gekennzeichnet, dass** die Aufnahme ein Substratträger (Chuck) (2) zur Aufnahme eines Wafers ist.

17. Vorrichtung nach einem der Ansprüche 11 bis 16, **dadurch gekennzeichnet, dass** die erste Energiequelle (1.1) eine Anregungsfrequenz von 10 kHz bis 27 MHz aufweist.

18. Vorrichtung nach einem der Ansprüche 11 bis 17, **dadurch gekennzeichnet, dass** die zweite Energiequelle (1.2) zur Erzeugung des hochdichten Plasmas eine Hochfrequenzquelle in Verbindung mit einer Spulenanordnung/einem Spulensystem (6) ist und zur Erzeugung des hochdichten Plasmas eine Anregungsfrequenz > 2 MHz aufweist.

19. Vorrichtung nach einem der Ansprüche 11 bis 18, **dadurch gekennzeichnet, dass** die zweite Energiequelle (1.2) eine Mikrowellenquelle ist.

## Claims

1. A method for structuring components consisting of a material based on silicate glass or glass ceramic, using at least one energy source (1.1, 1.2), wherein a removal of the material is accomplished partially on at least a first surface (5a) of the component (5) by plasma etching and during the plasma etching at least on the surface to be etched, a substrate temperature is set which is higher than 130°C but lower than the softening temperature of the material and wherein during the plasma etching high ion energies alternate with reduced ion energies.

2. The method according to claim 1, **characterized in that** it is carried out with at least one energy source (1.1, 1.2) in a fluorine-containing gas mixture and that at least on the first surface (5a) of the component (5) a mask (7) is applied which exposes the regions of the material of the component (5) which are to be removed.

3. The method according to claim 1 or 2, **characterized in that**
- a plasma having the possibility of varying the ion energy is generated with a first energy source (1.1) in the form of a high-frequency or low-frequency plasma source
and/or
- a high-density plasma (HDP) is generated with a second energy source (1.2).

4. The method according to one of claims 1 to 3, **characterized in that** the substrate temperature is 130°C to 700°C and in particular lies between 300°C and 500°C.

5. The method according to claim 4, **characterized in that** during a reduction of the glass etching rate caused by the formation of non-volatile reaction products the ion energy is increased briefly with the etching time and is then reduced again.

6. The method according to claim 4 or 5, **characterized in that** the ion energy is varied alternately after each 30 s to 90 s.

7. The method according to one of claims 1 to 6, **characterized in that** an etching profile (8) to be produced can be adjusted as a function of ion energy and/or ion density and/or the composition of the gas mixture and/or the substrate temperature, wherein the etching profile (8) can be adjusted by the ratio of ion energy, ion density and passivating gases on the one hand to the substrate temperature on the other hand whereby
- the ion density is increased to increase the steepness of an etching slope (8.1) of the etching profile (8)
and/or
- that the fluorine content in the gas mixture and/or the temperature is increased to reduce the steepness of the etching slope (8.1).

8. The method according to one of claims 1 to 9, **characterized in that** before the etching process a mask (7) made of a resistant metal is applied at least to the first surface (5a) of the material of the component (5) to be etched, which in particular consists of chromium, nickel, aluminium or alloys thereof.

9. The method according to one of claims 1 to 8, **characterized in that** before the etching process a mask (7) made of a temperature-resistant organic material is applied at least to the first surface (5a) of the material of the component (5) to be etched, which in particular consists of polyamides or epoxy resin.

10. The method according to one of claims 1 to 9, **characterized in that** the plasma etching takes place at a process pressure of 1 to 40 Pa and a bias voltage up to 300 V.

11. Apparatus for structuring components (5) consisting of silicate glass or glass ceramic, wherein a removal of the material is accomplished partially on at least a first surface (5a) of the component (5), wherein the apparatus is equipped with a heater (3) for generating a substrate temperature at least on the surface to be etched which is higher than 130°C but lower than the softening temperature of the material of the component (5) and with at least one energy source (1.1, 1.2) which produces varying ion energies.

12. The apparatus according to claim 11, **characterized in that** it comprises
- at least one energy source (1.1, 1.2) to generate the plasma,
- a fluorine-containing gas mixture and
- a mask (7) applied at least to the first surface (5a) of the component (5), which exposes the regions of the material of the component (5) to be removed.

13. The apparatus according to claim 11 or 12, **characterized in that** it comprises
- a first energy source (1.1) in the form of a high-frequency or low-frequency plasma source to generate a plasma with the possibility of varying the ion energy and/or
- a second energy source (1.2) for generating a high-density plasma (HDP).

14. The apparatus according to one of claims 11 to 13, **characterized in that** a substrate temperature of 130°C to 700°C, in particular of 300°C to 500°C can be generated with the heater (3).

15. The apparatus according to one of claims 11 to 14, **characterized in that** it comprises a vacuum chamber (4) for plasma etching in which a receptacle for the component (5) is disposed, wherein
- the heater (3) is coupled to the receptacle /integrated in the receptacle and/or
- is disposed above the receptacle and is configured as radiant heating.

16. The apparatus according to claim 15, **characterized in that** the receptacle is a substrate carrier (chuck) (2) for receiving a wafer.

17. The apparatus according to one of claims 11 to 16, **characterized in that** the first energy source (1.1) has an excitation frequency of 10 kHz to 27 MHz.

18. The apparatus according to one of claims 11 to 17, **characterized in that** the second energy source (1.2) for generating a high-density plasma is a highfrequency source connected to a coil arrangement / a coil system (6) and has an excitation frequency of >2 MHz to generate a high-density plasma.

19. The apparatus according to one of claims 11 to 18, **characterized in that** the second energy source (1.2) is a microwave source.

## Revendications

1. Procédé pour structurer des pièces composées d'un matériau à base de verre au silicate ou de vitrocéramique en utilisant au moins une source d'énergie (1.1, 1.2), dans lequel le matériau est partiellement enlevé sur au moins une première surface (5a) de la pièce (5) par gravure au plasma et, pendant la gravure au plasma, une température de substrat supérieure à 130°C mais inférieure à la température de ramollissement du matériau est ajustée au moins sur la surface à graver, et dans lequel des énergies d'ionisation élevées alternent avec des énergies d'ionisation basses pendant la gravure au plasma.

2. Procédé selon la revendication 1, **caractérisé en ce qu'**il est réalisé avec au moins une source d'énergie (1.1, 1.2) dans un mélange gazeux contenant du fluor et **en ce qu'**un masque (7) découvrant les zones à enlever du matériau de la pièce (5) est posé au moins sur la première surface (5a) de la pièce (5).

3. Procédé selon la revendication 1 ou 2, **caractérisé en ce que**
- un plasma est créé avec une première source d'énergie (1.1) formant une source d'énergie à haute fréquence ou à basse fréquence avec la possibilité de modifier l'énergie d'ionisation
et/ou
- un plasma à haute densité (High Density Plasma, HDP) est créé avec une deuxième source d'énergie (1.2).

4. Procédé selon l'une des revendications 1 à 3, **caractérisé en ce que** la température du substrat est comprise entre 130°C et 700°C et en particulier entre 300°C et 500°C.

5. Procédé selon la revendication 4, **caractérisé en ce que** l'énergie d'ionisation est augmentée pendant une courte durée lors d'une baisse du rendement de gravure du verre avec le temps de gravure due à la formation de produits de réaction non volatils, puis à nouveau réduite.

6. Procédé selon la revendication 4 ou 5, **caractérisé en ce que** l'énergie d'ionisation est modifiée alternativement toutes les 30 s à 90 s.

7. Procédé selon l'une des revendications 1 à 6, **caractérisé en ce qu'**un profil de gravure (8) à créer peut être ajusté en fonction de l'énergie d'ionisation et/ou de la densité d'ions et/ou de la composition du mélange gazeux et/ou de la température du substrat,
le profil de gravure (8) étant ajustable d'une part par le rapport de l'énergie d'ionisation, de la densité d'ions et du gaz de passivation et d'autre part par rapport à la température du substrat,
- en augmentant la densité d'ions pour augmenter la pente d'un flanc de gravure (8.1) du profil de gravure (8)
et/ou
- en augmentant la teneur en fluor du mélange gazeux et/ou la température pour réduire la pente du flanc de gravure (8.1).

8. Procédé selon l'une des revendications 1 à 9, **caractérisé en ce qu'**un masque (7) fait d'un métal résistant, composé en particulier de chrome, de nickel, d'aluminium ou de leurs alliages, est posé avant le processus de gravure au moins sur la première surface (5a) du matériau de la pièce (5) à graver.

9. Procédé selon l'une des revendications 1 à 8, **caractérisé en ce qu'**un masque (7) fait d'un matériau inorganique résistant à haute température, composé en particulier de polyamides ou de résine époxy, est posé avant le processus de gravure au moins sur la première surface (5a) du matériau de la pièce (5) à graver.

10. Procédé selon l'une des revendications 1 à 9, **caractérisé en ce que** la gravure au plasma est effectuée sous une pression de process de 1 à 40 Pa et une tension de polarisation de jusqu'à 300 V.

11. Dispositif pour structurer des pièces (5) composées de verre au silicate ou de vitrocéramique, dans lequel le matériau est partiellement enlevé sur au moins une première surface (5a) de la pièce (5) par gravure au plasma, le dispositif étant équipé d'un chauffage (3) pour produire une température du substrat supérieure à 130°C mais inférieure à la température de ramollissement du matériau de la pièce (5) au moins sur la surface à graver et d'au moins une source d'énergie (1.1, 1.2) qui produit des énergies d'ionisation changeantes.

12. Dispositif selon la revendication 11, **caractérisé en ce qu'**il présente
- au moins une source d'énergie (1.1, 1.2) pour la production du plasma,
- un mélange gazeux contenant du fluor et
- un masque (7) appliqué au moins sur la première surface (5a) de la pièce (5), qui expose les zones à enlever du matériau de la pièce (5).

13. Dispositif selon les revendications 11 et 12, **caractérisé en ce qu'**il présente
- une première source d'énergie (1.1) formant une source d'énergie à haute fréquence ou à basse fréquence pour produire un plasma avec la possibilité de modifier l'énergie d'ionisation
et/ou
- une deuxième source d'énergie (1.2) pour produire un plasma à haute densité (High Density Plasma, HDP).

14. Dispositif selon l'une des revendications 11 à 13, **caractérisé en ce que** le chauffage (3) peut produire une température du substrat de 130°C à 700°C, en particulier de 300°C à 500°C.

15. Dispositif selon l'une des revendications 11 à 14, **caractérisé en ce qu'**il présente une chambre à vide (4) pour la gravure au plasma, dans laquelle est disposé un réceptacle pour la pièce (5),
- le chauffage (3) étant couplé avec le réceptacle ou intégré dans le réceptacle et/ou
- disposé au-dessus du réceptacle et conçu comme un chauffage par radiation.

16. Dispositif selon la revendication 15, **caractérisé en ce que** le réceptacle est un support de substrat (*chuck*) (2) pour recevoir une plaquette.

17. Dispositif selon l'une des revendications 11 à 16, **caractérisé en ce que** la première source d'énergie (1.1) présente une fréquence d'excitation de 10 kHz à 27 MHz.

18. Dispositif selon l'une des revendications 11 à 17, **caractérisé en ce que** la deuxième source d'énergie (1.2) est une source de hautes fréquences reliée à une disposition d'enroulement ou un système d'enroulement (6) pour produire le plasma à haute densité et présente pour produire le plasma à haute densité une fréquence d'excitation supérieure à 2 MHz.

19. Dispositif selon l'une des revendications 11 à 18, **caractérisé en ce que** la deuxième source d'énergie (1.2) est une source de micro-ondes.
